# EUROPÄISCHE PATENTSCHRIFT

(11) **EP 2 406 868 B1**
(45) Veröffentlichungstag und Bekanntmachung des Hinweises auf die Patenterteilung: **07.01.2015**
(21) Anmeldenummer: 10706615.1
(22) Anmeldetag: 01.03.2010
(51) Int. Cl.: H02K 15/14, H02K 1/18

(54) **ELEKTRISCHE MASCHINE**
ELECTRIC MACHINE
MACHINE ÉLECTRIQUE

(30) Priorität: 12.03.2009 DE 102009001519
(43) Veröffentlichungstag der Anmeldung: 18.01.2012
(73) Patentinhaber: Robert Bosch GmbH, 70442 Stuttgart (DE)
(72) Erfinder: AHRENS, Dietmar, 77933 Lahr (DE); SCHUETZ, Juergen, 77866 Rheinau (DE)
(86) Internationale Anmeldenummer: PCT/EP2010/052537
(87) Internationale Veröffentlichungsnummer: WO 2010/102918

(56) Entgegenhaltungen:
- DE-A1- 2 936 020
- DE-A1- 10 332 958
- DE-B- 1 248 150
- JP-A- 2008 079 421
- JP-A- 2008 312 347

## Beschreibung

### Stand der Technik

Die Erfindung betrifft eine elektrische Maschine, insbesondere einen Elektromotor zur Verstellung von Elementen eines Kraftfahrzeugs, und ein Verfahren zur Herstellung einer Verbindung zwischen einem Statorkörper und einem Gehäuseteil. Speziell betrifft die Erfindung das Gebiet der Elektromotoren für Hilfs- und Komfortaggregate in Kraftfahrzeugen, beispielsweise Schiebedachantriebe, Sitzverstelleinrichtungen, elektrische Fensterheber, Scheibenwischerantriebe, Getriebe- und Kupplungssteller, elektrische Lenkunterstützungseinrichtungen, Antiblockiersysteme, ÖI-, Benzin- und Wasserpumpen, Ventilsteller sowie sonstige Stellantriebe.

Aus der DE 103 32 958 A1 ist ein Verfahren zur Herstellung einer festen Verbindung zwischen einem Hohlzylinder und einem von dem Hohlzylinder umschlossenen Innenzylinder bekannt. Dabei ist der Innenzylinder aus einer Vielzahl von axial aneinanderliegenden Profillamellen aufgebaut, die ein zylinderförmiges Lamellenpaket bilden. Zur Erzielung einer zuverlässigen Fügeverbindung ohne Spananfall und mit geringen Montagekosten beim Fügeprozess wird der Innenzylinder in den Hohlzylinder weitgehend kräftefrei eingeschoben und nach Erreichen einer vorgegebenen axialen Einschiebeposition durch Relativdrehung von Innenzylinder und Hohlzylinder ein Form- und Kraftschluss zwischen Innenzylinder und Hohlzylinder hergestellt. Die Innenkontur des Hohlzylinders und die Außenkontur des Innenzylinders werden hierzu aufeinander abgestimmt geformt.

Das aus der DE 103 32 958 A1 bekannte Verfahren hat den Nachteil, dass zwischen dem Innenzylinder und dem mit dem Innenzylinder verbundenen Hohlzylinder herstellungsbedingt Spalte gebildet sind, wobei der Form- und Kraftschluss auf einzelne Bereiche beschränkt ist. Dabei kann durch Materialermündung oder dergleichen die Verbindungskraft über die Lebensdauer abnehmen. Außerdem kann es gegebenenfalls zu einer Rückdrehung der Relativdrehung zwischen dem Hohlzylinder und dem Innenzylinder kommen, so dass sich die Verbindung löst, was unerwünscht ist.

Aus der JP 2008 312347 A ist ein Gehäuse bekannt mit Nuten, die innerhalb des Gehäuses auf vollem Umfang liegen. Der Stator weist am äußeren Umfang des sitzenden axial verlaufenden Nuten auf, die als Fließkanäle für einen Klebstoff dienen. Dabei werden nur die Nuten innerhalb des Gehäuses mit dem Klebstoff gefüllt.

Die DE2936020A1 zeigt eine elektrische Maschine mit einem Gehäuse und mit einem Standerblechpaket, das im Gehäuse befestigt ist, wobei die Befestigung ohne wesentliche Veränderung der Form des Gehäuses durch wenigstens ein plastisches/elastisches verformtes Element bewirkt wird.

### Offenbarung der Erfindung

Das erfindungsgemäße Verfahren mit den Merkmalen des Anspruchs 1 hat den Vorteil, dass eine vorteilhafte Verbindung des Gehäuseteils mit dem in dem Gehäuseteil angeordneten Statorkörper erzielt ist. Speziell kann eine einfach herzustellende, kostengünstige und toleranzausgleichende Verbindung geschaffen werden, die ohne zusätzliche Bauteile auskommt und die spanfrei erfolgen und dicht ausgeführt werden kann. Vorteilhaft ist es, dass das Erwärmen des Klebstoffs und ein thermisches Aushärten des Klebstoffs in einem gemeinsamen Prozessschritt durchgeführt werden. Hierbei kann sich an die Erwärmung zum Verringern der Viskosität des Klebstoffs unmittelbar ein thermischer Härtungsprozess zum Aushärten des Klebstoffs anschließen.

Durch die in den Unteransprüchen aufgeführten Maßnahmen sind vorteilhafte Weiterbildungen des im Anspruch 1 angegebenen Verfahrens möglich.

Vorteilhaft ist es, dass der zwischen der Außenseite des Statorkörpers und der Innenseite des Gehäuseteils gebildete Fügespalt zumindest im Wesentlichen mit dem Klebstoff gefüllt ist und dass die Aussparung des Statorkörpers teilweise mit dem Klebstoff gefüllt ist. Vor der Montage des Statorkörpers in das Gehäuseteil

wird die Aussparung des Statorkörpers vorzugsweise vollständig mit dem Klebstoff gefüllt. Dann kann der Statorkörper in das Gehäuseteil eingefügt werden, wobei die Einfügung über den Fügespalt erfolgen kann. Im eingefügten Zustand kann durch Erhitzen des Klebstoffs eine Viskosität des Klebstoffs verringert werden, so dass sich der Klebstoff über den Fügespalt verteilt.

Nach dem Aushärten des Klebstoffs ist somit eine zuverlässige Verbindung zwischen dem Statorkörper und dem Gehäuseteil gebildet. Hierbei kann die Verbindung bei unterschiedlichen Materialkombinationen zuverlässig ausgestaltet werden. Beispielsweise kann das Gehäuseteil als Polgehäuse ausgestaltet sein. Mögliche Werkstoffe für das Gehäuseteil sind Kunststoff, Stahl und Aludruckguss.

Vorteilhaft ist es auch, dass der Statorkörper zumindest eine in einer Umfangsrichtung verlaufende Nut aufweist, die eine an der Außenseite des Statorkörpers vorgesehene Aussparung bildet, und/oder dass der Statorkörper zumindest einen in einer Umfangsrichtung verlaufenden Absatz aufweist, der eine an der Außenseite des Statorkörpers vorgesehene Aussparung bildet. Hierbei ist es ferner vorteilhaft, dass die Aussparung als teilweise ringförmige Aussparung oder als ringförmige Aussparung ausgestaltet ist. Hierdurch kann eine relativ große Menge an Klebstoff vorteilhaft über den Umfang des Statorkörpers in der Aussparung beim Einfügen vorgesehen sein, wodurch eine gleichmäßige Verteilung des Klebstoffs über den Umfang beim Fließen des Klebstoffs in den Fügespalt ermöglicht ist. Hierdurch kann der Fügespalt auch zumindest im Wesentlichen vollständig mit dem Klebstoff gefüllt werden.

Vorteilhaft ist es auch, dass der Statorkörper zumindest eine in einer axialen Richtung verlaufende Nut aufweist, die eine an der Außenseite des Statorkörpers vorgesehene Aussparung bildet, und/oder dass der Statorkörper zumindest einen in einer axialen Richtung verlaufenden Absatz aufweist, der eine an der Außenseite des Statorkörpers vorgesehene Aussparung bildet. Ferner kann die Nut auch schräg ausgestaltet sein.

Außerdem ist es vorteilhaft, wenn zusätzlich oder alternativ an der Innenseite des Gehäuseteils eine in der Umfangsrichtung, in einer axialen Richtung oder schräg verlaufende Nut vorgesehen ist, die die an der Innenseite des Gehäuseteils vorgesehene Aussparung bildet.

In vorteilhafter Weise ist eine Nut an dem Statorkörper beziehungsweise dem Gehäuseteil als umlaufende Nut ausgebildet, die sich über 360° des Umfangs erstreckt. Möglich ist auch eine segmentierte Ausgestaltung. Speziel könne drei Segmente von jeweils 100° vorgesehen sein.

Vorteilhaft ist es auch, dass der Statorkörper mehrere Lamellen aufweist, dass die Aussparung als ringförmige Aussparung ausgestaltet ist und dass die ringförmige Aussparung durch zumindest eine Lamelle gebildet ist, die einen Durchmesser aufweist, der kleiner ist als ein Außendurchmesser der Außenseite des Statorkörpers. Hierbei können auch mehrere Lamellen solch einen verringerten Durchmesser aufweisen, um die ringförmige Aussparung zu bilden. Speziell können die Lamellen durch Stanzen gebildet sein, so dass sich ein aus Stanzlamellen zusammengesetzter Statorkörper ergibt. Die Ausgestaltung der Aussparung ergibt sich dann beim Paketieren des Statorkörpers. Somit kann die Aussparung mit relativ geringem Aufwand in einer gewünschten Dimensionierung hergestellt werden. Ferner ist eine Spanbildung oder dergleichen, wie sie bei einer nachträglichen Bearbeitung des Statorkörpers auftreten kann, von vornherein verhindert.

Vorteilhaft ist es allerdings auch, dass der Statorkörper mehrere Lamellen aufweist und dass die Ausspaarung durch zumindest eine Ausnehmung in zumindest einer Lamelle gebildet ist. Bei dieser Ausgestaltung kann die Ausnehmung der Lamelle in vorteilhafter Weise durch Stanzen gebildet sein. Auf diese Weise können unterschiedlich ausgestaltete Aussparungen relativ einfach hergestellt werden. Insbesondere können in Längsrichtung ausgestaltete Aussparungen durch aufeinander abgestimmte Ausnehmungen in den Lamellen des Statorkörpers ausgestaltet werden.

In vorteilhafter Weise umgibt die Innenfläche des Gehäuseteils die Außenseite des Statorkörpers zumindest im Bereich der Aussparung. Hierdurch ist die Aussparung im eingesetzten Zustand des Statorkörpers vollständig von der Innenfläche des Gehäuseteils umgeben, so dass beim Erwärmen des Klebstoffs ein vorteilhaftes Fließen des Klebstoffs in den Fügespalt ermöglicht ist. Dadurch kann die Menge des Klebstoffs, der in die Aussparung eingefüllt ist, vorteilhaft ausgenutzt werden.

In vorteilhafter Weise umfasst der Statorkörper zumindest eine in einer Längsrichtung verlaufende Nut, die eine an der Außenseite des Statorkörpers vorgesehene Aussparung bildet. Hierbei können auch mehrere solche in Längsrichtung verlaufende Nuten in Umfangsrichtung über die Außenseite des Statorkörpers verteilt sein. Hierdurch kann eine vorteilhafte Verteilung des Klebstoffs in den Fügespalt erzielt werden. Speziell kann eine relativ gleichmäßige Verteilung des Klebstoffs in dem Fügespalt bei einem Statorkörper erreicht werden, der in Längsrichtung eine große Ausdehnung aufweist.

Durch die vollständige oder teilweise Auffüllung des Fügespalts mit dem Klebstoff kann ein Luftspalt zwischen dem Statorkörper und dem Gehäuseteil verhindert oder zumindest verringert werden. Dadurch kann eine toleranzausgleichende Verbindung geschaffen werden, die dicht ausgeführt ist. Außerdem kann ein Wärmeübergang von dem Statorkörper auf das Gehäuseteil, insbesondere das Polgehäuse, verbessert werden. Somit ist eine vorteilhafte thermische Anbindung des Statorkörpers an das Gehäuseteil möglich. Hierbei ist es ferner vorteilhaft, dass der Klebstoff als wärmeleitender Klebstoff ausgebildet ist. Beispielsweise kann einem für die Funktion der Verbindung dienenden Grundmaterial des Klebstoffs ein geeigneter, wärmeleitender Füllstoff zugesetzt werden, um die Wärmeleitfähigkeit zu verbessern.

In vorteilhafter Weise sind das Stanzpaket und das Gehäuseteil so ausgestaltet und der Klebstoff so ausgewählt, dass das Fließen des Klebstoffes in den Fügespalt beim Erwärmen des Klebstoffs durch eine Kapillarwirkung des Fügespalts unterstützt ist. Ferner werden das Stanzpaket und das Gehäuseteil beim Erwärmen des Klebstoffs vorzugsweise so im Raum orientiert und/oder bewegt, dass ein Fließen des Klebstoffs in dem Fügespalt und/oder eine Verteilung des Klebstoffs in dem Fügespalt durch die Schwerkraft und/oder eine andere Beschleunigungskraft unterstützt werden. Speziell bei in Längsrichtung verlaufenden Nuten, die mit Klebstoff gefüllt sind, ist ein langsames Rotieren zum Ausnutzen der Schwerkraft oder ein schnelles Rotieren zum Ausnutzen einer Fliehkraft möglich, um den erwärmten Klebstoff gleichmäßig über den Fügespalt zu verteilen.

Speziell können die Lamellen durch ein Stanzverfahren gebildet sein, so dass sich ein aus Stanzlamellen zusammengesetzter Statorkörper ergibt. Die Ausgestaltung der Aussparung ergibt sich dann beim Paketieren des Statorkörpers. Somit kann die Aussparung mit relativ geringem Aufwand in einer gewünschten Dimensionierung hergestellt werden. Ferner ist eine Spanbildung oder dergleichen, wie sie bei einer nachträglichen Bearbeitung des Statorkörpers auftreten kann, von vornherein verhindert.

Es ist ferner vorteilhaft, dass der Klebstoff, der in einem Verfahrensschritt in die vorgesehenen Aussparungen eingebracht wird, als wärmeleitender Klebstoff ausgebildet ist. Beispielsweise kann einem für die Funktion der Verbindung dienenden Grundmaterial des Klebstoffs ein geeigneter, wärmeleitender Füllstoff zugesetzt werden, um die Wärmeleitfähigkeit zu verbessern.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine schematische Darstellung eines Statorkörpers einer elektrischen Maschine entsprechend einem ersten Ausführungsbeispiel;
Fig. 2 den in Fig. 1 mit II bezeichneten Ausschnitt des Statorkörpers beim Einfügen in ein auszugsweise dargestelltes Gehäuseteil der elektrische Maschine zur Erläuterung eines Verfahrens zur Verbindung des Statorkörpers mit dem Gehäuseteil;
Fig. 3 den in Fig. 2 dargestellten Ausschnitt im montierten Zustand zur Erläuterung des Verfahrens zur Verbindung des Statorkörpers mit dem Gehäuseteil der elektrischen Maschine und
Fig. 4 einen Statorkörper einer elektrischen Maschine entsprechend einem zweiten Ausführungsbeispiel in einer schematischen, räumlichen Darstellung.

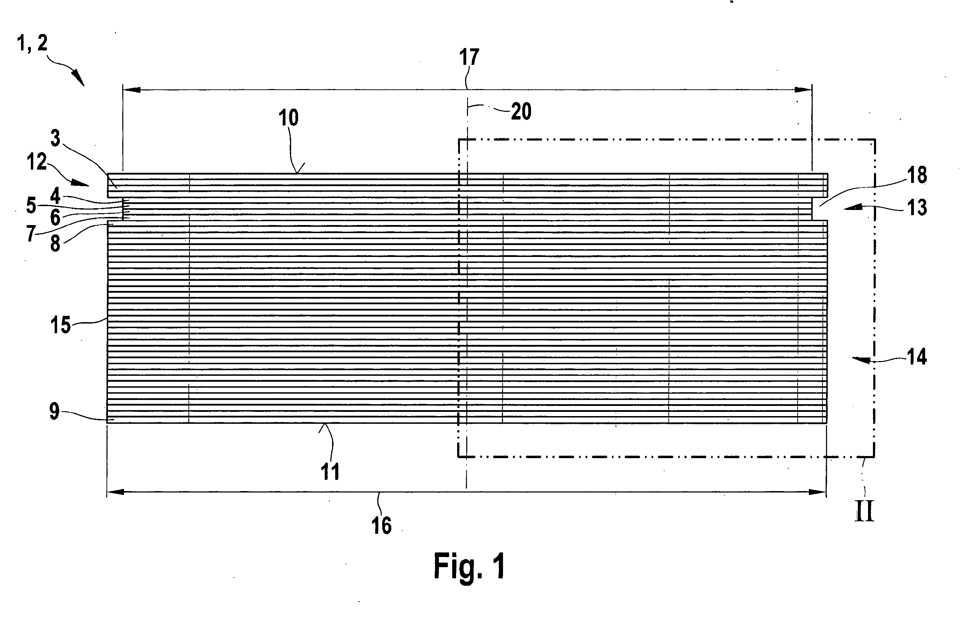

Fig. 1 zeigt einen Statorkörper 1 einer elektrischen Maschine 2 in einer schematischen Darstellung entsprechend einem ersten Ausführungsbeispiel der Erfindung. Die elektrische Maschine 2 kann insbesondere als Elektromotor 2 für Einrichtungen zur Verstellung von Elementen eines Kraftfahrzeugs dienen. Speziell kann der Elektromotor 2 als bürstenloser Gleichstrommotor ausgestaltet sein. Beispielsweise kann der Elektromotor 2 für Hilfs- und Komfortaggregate von Kraftfahrzeugen dienen. Mögliche Einsatzbereiche sind beispielsweise Schiebedachantriebe, Sitzverstelleinrichtungen, Fensterheber, Scheibenwischer, Getriebe- und Kupplungssteller, elektrische Lenkungseinrichtungen, Antiblockiersysteme, Öl-, Benzin- und Wasserpumpen, Ventilsteller sowie sonstige Stellantriebe. Die elektrische Maschine 2 eignet sich jedoch auch für andere Anwendungsfälle.

Der Statorkörper 1 weist mehrere Lamellen 3, 4, 5, 6, 7, 8, 9 auf. Hierbei sind zur Vereinfachung der Darstellung nur die Lamellen 3 bis 9 gekennzeichnet. Durch die Lamellen 3 bis 9 ist der Statorkörper 1 in Form eines Statorpakets 1 ausgestaltet. Die Lamellen 3 bis 9 können beispielsweise durch Stanzen ausgebildet sein. Der Statorkörper 1 weist eine erste Stirnfläche 10 und eine zweite Stirnfläche 11 auf. Die Stirnflächen 10, 11 sind voneinander abgewandt. In diesem Ausführungsbeispiel weist der Statorkörper 1 einen Kopfbereich 12, einen Bereich 13 mit zurückgesetzten Lamellen 4, 5, 6, 7 und einen Fußbereich 14 auf. Der Statorkörper 1 weist eine Außenseite 15 auf, die im Kopfbereich 12 und im Fußbereich 14 zylindermantelförmig ausgestaltet ist. Hierdurch ergibt sich ein Außendurchmesser 16 des Statorkörpers 1 an seiner Außenseite 15. Die Lamellen 4 bis 7 im Bereich 13 sind gegenüber dem Außendurchmesser 16 zurückgesetzt. Die Lamellen 4 bis 7 weisen hierbei einen Durchmesser 17 auf, der kleiner ist als der Außendurchmesser 16 der Außenseite 15 des Statorkörpers 1.

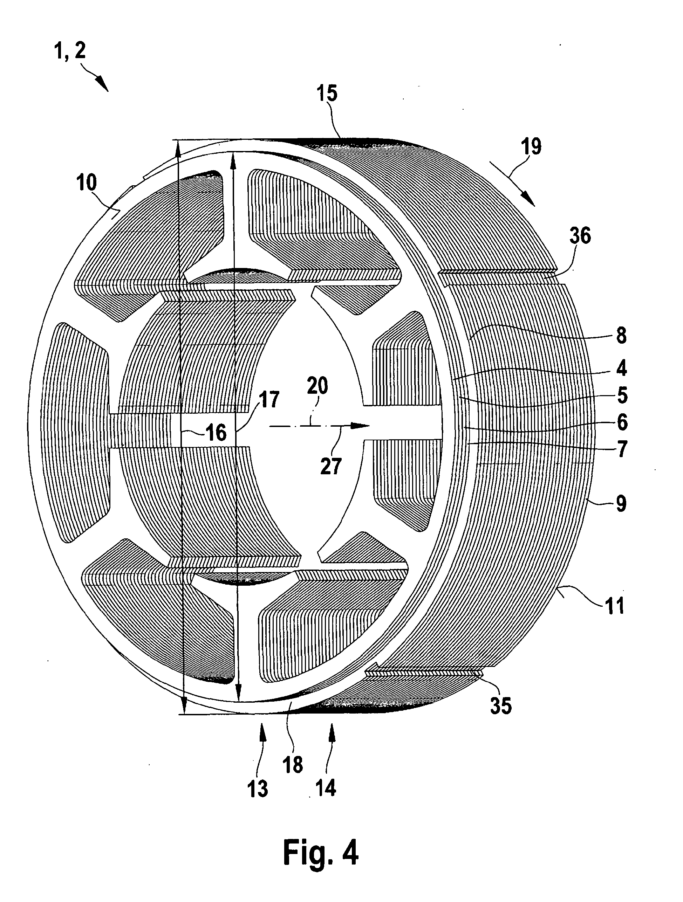

Die zurückgesetzten Lamellen 4 bis 7 bilden im Bereich 13 zwischen dem Kopfbereich 12 und dem Fußbereich 14 eine Aussparung 18, die in einer Umfangsrichtung 19 (Fig. 4) ringförmig ausgedehnt ist. Entlang einer Längsachse 20 des Statorkörpers 1 erstreckt sich die Aussparung 18 über die Lamellen 4 bis 7. Somit ist die Aussparung 18 in diesem Ausführungsbeispiel als Nut, insbesondere als ringförmige Nut (Ringnut 18) ausgestaltet. Dies ist eine Möglichkeit, um eine ringförmige Aussparung 18 auszugestalten. Hierbei besteht der Vorteil, dass die Lamellen 3 bis 9 durch Stanzen ausgebildet sein können. Hierbei können die Lamellen 3, 8, die den Kopfbereich 12 und den Fußbereich 14 bilden, auf gleiche Weise gestanzt sein, während die Lamellen 4 bis 7 des Bereichs 13 einen zurückgesetzten Durchmesser 17 aufweisen. Die ringförmige Aussparung 18 ergibt sich hierbei während des Paketierens des Statorkörpers 1, so dass die Herstellung erleichtert und das Auftreten von Spänen oder dergleichen von vornherein verhindert ist.

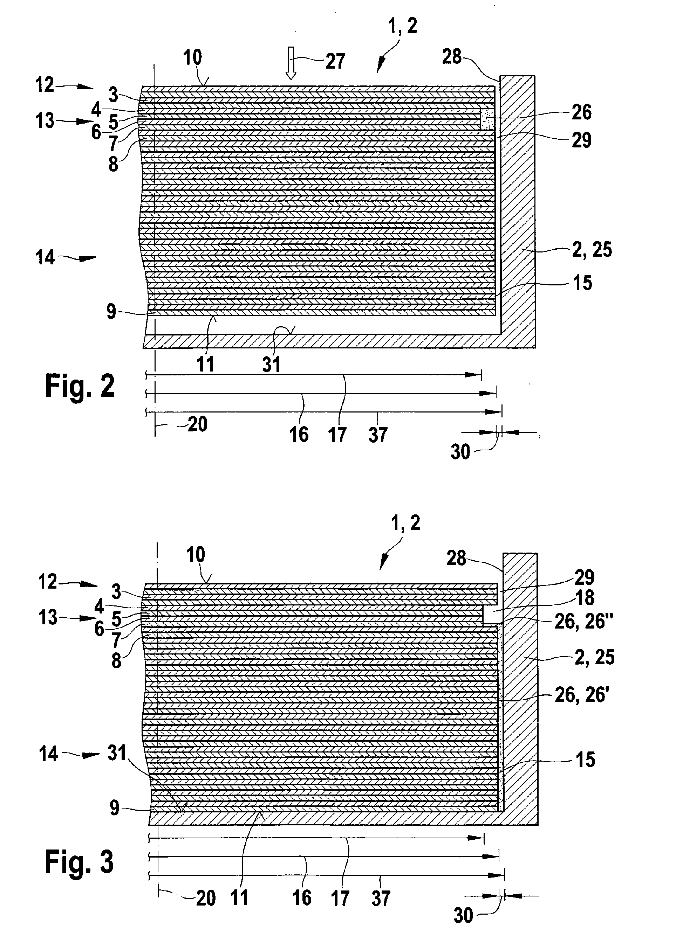

Fig. 2 zeigt den in Fig. 1 mit II bezeichneten Ausschnitt des Statorkörpers 1 mit einem Gehäuseteil 25 der elektrischen Maschine 2 entsprechend dem ersten Ausführungsbeispiel während eines Montagevorgangs. Hierbei wird ein Verfahren zur Herstellung einer Verbindung zwischen dem Statorkörper 1 und dem Gehäuseteil 25 ausgeführt. Zuerst wird in die ringförmige Aussparung 18 des Statorkörpers 1, der in der Fig. 1 dargestellt ist, ein Klebstoff 26 eingebracht. Der Klebstoff 26 füllt die Aussparung 18 umfänglich vorzugsweise vollständig aus, wobei der Klebstoff 26 zunächst auch etwas über die Außenseite 14 und somit den Außendurchmesser 16 des Statorkörpers 1 überstehen kann. Dann wird der Statorkörper 1 in einer Fügerichtung 27 in das Gehäuseteil 25 eingefügt. Die Fügerichtung 27 ist dabei parallel zur Längsachse 20 des Statorkörpers 1.

Das Gehäuseteil 25 weist eine Innenseite 28 auf. Die Innenseite 28 des Gehäuseteils 25 ist an die Außenseite 15 des Statorkörpers 1 angepasst. Vorzugsweise ist die Innenseite 28 entsprechend der Außenseite 15 zylindermantelförmig ausgestaltet. Das Gehäuseteil 25 weist an seiner Innenseite 28 einen Innendurchmesser 29 auf, der etwas größer vorgegeben ist als der Außendurchmesser 16 des Statorkörpers 1. Hierdurch ist zwischen der Außenseite 15 des Statorkörpers 1 und der Innenseite 28 des Gehäuseteils 25 ein Fügespalt 29 gebildet. Der Fügespalt 29 weist hierbei eine Spaltbreite 30 auf. Die Spaltbreite 30 des Fügespalts 29 ist vorzugsweise relativ klein, aber noch so groß bemessen, dass beim Einfügen des Statorkörpers 1 in das Gehäuseteil 25 keine Späne, insbesondere keine Metallspäne, entstehen.

Beim Einfügen des Statorkörpers 1 in das Gehäuseteil 25 wird auch der in der Aussparung 18 vorgesehene Klebstoff 26 in das Innere des Gehäuseteils 25 eingebracht. Dabei umgibt die Innenseite (Innenfläche) 28 des Gehäuseteils 25 die Außenseite 15 des Statorkörpers 1 und somit auch den Bereich 13 der Außenseite 15, in dem die Aussparung 18 mit dem Klebstoff 26 vorgesehen ist. Der Statorkörper 1 wird so weit in das Gehäuseteil 25 eingefügt, dass die Lamelle 9 an einer Bodenfläche 31 des Gehäuseteils 25 anliegt, wie es in der Fig. 3 veranschaulicht ist.

Fig. 3 zeigt den in Fig. 1 dargestellten Ausschnitt des Statorkörpers 1 und des Gehäuseteils 25 der elektrischen Maschine 2 im verbundenen Zustand. In diesem Zustand ist der Statorkörper 1 vollständig in das Gehäuseteil 25 eingefügt. Die Lamelle 9, die sich am unteren Ende des Statorkörpers befindet, liegt hierbei mit ihrer Stirnfläche 11 an der Bodenfläche 31 des Gehäuseteils 25 an. Diese Anlage erfolgt vorzugsweise ohne einen verbleibenden Luftspalt.

Die Verbindung des Statorkörpers 1 mit dem Gehäuseteil 25 erfolgt mittels des Klebstoffs 26. Das Gehäuseteil 25 mit dem eingefügten Statorkörper 1 kann beispielsweise so im Raum orientiert werden, dass die Stirnfläche 11 des Statorkörpers 1 nach unten und somit die Stirnfläche 10 des Statorkörpers 1 nach oben gerichtet ist. Dadurch ist der Statorkörper 1 mit seiner Längsachse 20 bezüglich der Schwerkraft ausgerichtet. Der Statorkörper 1 und/oder das Gehäuseteil 25 wird nun einer Wärmequelle ausgesetzt. Hierbei erwärmt sich auch der Klebstoff 26, der zunächst in der Aussparung 18 angeordnet ist. Durch die Erwärmung nimmt die Viskosität des Klebstoffs 26 ab, so dass dieser nach und nach in den Fügespalt 29 fließt. Hierbei fließt der Klebstoff 26 in Richtung der Schwerkraft in den Fügespalt 29. Das heißt, der Klebstoff 26 füllt den Fügespalt 29 von der Aussparung 18 aus nach unten auf. Da zwischen der zweiten Stirnfläche 11 und der Bodenfläche 31 kein Luftspalt besteht, wird ein Untertließen des Statorkörpers 1 mit dem Klebstoff 26 verhindert.

Anschließend erfolgt ein Aushärten des Klebstoffs 26. Dieses Aushärten erfolgt vorzugsweise in Form eines thermischen Aushärtens, das heißt durch Erwärmen des in dem Fügespalt 29 vorgesehenen Klebstoffs. Hierfür wird der Statorkörper 1 und/oder das Gehäuseteil 2 weiterhin einer Wärmequelle ausgesetzt. Das Erwärmen des Klebstoffs 26 zum Fließfähigmachen des Klebstoffs 26 und das anschließende thermische Aushärten des Klebstoffs kann in einem gemeinsamen Prozessschritt durchgeführt werden.

Um das Auffüllen des Fügespalts 29 mit dem Klebstoff 26 zu unterstützen, ist die Spaltbreite 30 vorzugsweise so vorgegeben, dass eine Kapillarwirkung auf den fließfähigen Klebstoff 26 ausgeübt wird. Möglich ist es auch, dass das Gehäuseteil 25 mit dem eingesetzten Statorkörper 1 einer Rotationsbewegung oder dergleichen ausgesetzt wird, um den Klebstoff 26 in dem Fügespalt 29 zu verteilen.

Im ausgehärteten Zustand des Klebstoffs 26, wie es in der Fig. 3 veranschaulicht ist, füllt somit ein Teil 26' des Klebstoffs 26 den Fügespalt 29 unterhalb der Aussparung 18 auf, während ein geringfügiger Rest 26" in der Aussparung 18 verbleibt. Oberhalb der Aussparung 18 verbleibt ein Teil des Fügespalts 29 frei. Das heißt, oberhalb der Aussparung 18 ist in diesem Ausführungsbeispiel ein Luftspalt gebildet. Allerdings kann auch dieser Teil des Fügespalts 29 mit einem Klebstoff 26 verschlossen werden. Beispielsweise durch nachträgliches Aufbringen eines Klebstoffs an der ersten Stirnfläche 10 im Bereich der Innenseite 28 des Gehäuseteils 25 und/oder durch eine geeignete Bewegung des Gehäuseteils 25 mit dem eingesetzten Statorkörper 1 während der Fließphase des Klebstoffs 26.

Fig. 4 zeigt einen Statorkörper 1 einer elektrischen Maschine 2 entsprechend einem zweiten Ausführungsbeispiel in einer räumlichen Darstellung. In diesem Fall ist die Aussparung 18 zwischen dem Fußbereich 14 des Statorkörpers 1 und der ersten Stirnfläche 10 des Statorkörpers 1 ausgebildet. Der in der Fig. 1 dargestellte Kopfbereich 12 des Statorkörpers 1 des ersten Ausführungsbeispiels entfällt hierbei. Die Aussparung 18 ist in Form eines Absatzes 18 an dem Statorkörper 1 ausgestaltet. Der Durchmesser 17 der Lamellen 4, 5, 6, 7 im Bereich 13 ist dabei kleiner als der Außendurchmesser 16 des Statorkörpers 1, wobei die übrigen Lamellen 8, 9 des Fußbereichs 14 den Außendurchmesser 16 des Statorkörpers 1 vorgeben. Ferner weist der Statorkörper 1 vier in Längsrichtung verlaufende Nuten 35, 36 auf, von denen in der Fig. 4 die Nuten 35, 36 dargestellt sind. Die Nuten 35, 36 bilden Aussparungen 35, 36 an der Außenseite 15 des Statorkörpers 1, die in der Längsrichtung 20 verlaufen.

Bei dem in der Fig. 4 dargestellten Statorkörper 1 des zweiten Ausführungsbeispiels werden die Aussparung 18 und die vier Nuten 35, 36 an der Außenseite 15 des Statorkörpers 1 vor dem Fügen mit einem Klebstoff 26 gefüllt, wie es anhand der Fig. 2 und 3 bei dem Statorkörper 1 des ersten Ausführungsbeispiels veranschaulicht ist. Dann wird der Statorkörper 1 in der Fügerichtung 27 in ein entsprechendes Gehäuseteil 25 eingesetzt. Anschließend wird der Statorkörper 1 und/oder das Gehäuseteil 25 einer Wärmequelle ausgesetzt, so dass der Klebstoff in der Aussparung 18 und den Nuten 35, 36 fließfähig wird. Die vier Nuten 35, 36 sind dabei in der Umfangsrichtung 19 gleichmäßig über die Außenseite 15 des Statorkörpers 1 verteilt. Somit ergibt sich eine vollständige Füllung des Fügespalts 29 zwischen der Aussenseite 15 des Statorkörpers 1 und der Innenseite 28 des Gehäuseteils 25. Somit kann auch bei diesem Ausführungsbeispiel eine zuverlässige mechanische Verbindung zwischen dem Statorkörper 1 und dem Gehäuseteil 25 geschaffen werden.

Vorzugsweise ist der Klebstoff 26 als wärmeleitender Klebstoff 26 ausgestaltet. Hierbei kann beispielsweise ein geeigneter Füllstoff in den Klebstoff 26 integriert werden, der eine Wärmeleitfähigkeit des Klebstoffs 26 verbessert. Somit kann eine hochfeste und/oder wärmeleitende Klebeverbindung zwischen dem Statorkörper 1 und dem Gehäuseteil 25 geschaffen werden.

Die Erfindung ist nicht auf die beschriebenen Ausführungsbeispiele beschränkt.

## Patentansprüche

1. Verfahren zur Herstellung einer Verbindung zwischen einem Statorkörper (1) und einem Gehäuseteil (25) mit folgenden Verfahrensschritten:
a) Ausgestalten zumindest einer Aussparung (18, 35, 36) an einer Außenseite (15) des Statorkörpers (1) und/oder an einer Innenseite (28) des Gehäuseteils (25);
b) zumindest im Wesentlichen Auffüllen der Aussparung (18, 35, 36) mit zumindest einem Klebstoff (26);
c) Einfügen des Statorkörpers (1) in das Gehäuseteil (25), wobei das Einfügen über einen zwischen der Außenseite (15) des Statorkörpers (1) und einer Innenseite (28) des Gehäuseteils (25) gebildeten Fügespalt (29) ermöglicht wird,
**dadurch gekennzeichnet,**
**dass** das Erwärmen des Klebstoffs (26) in der Aussparung (18, 35, 36), um ein Fließen des Klebstoffs (26) aus der Aussparung (18, 35, 36) in den Fügespalt (29) zu ermöglichen, und das thermische Aushärten des Klebstoffs (26) in einem gemeinsamen Prozessschritt durchgeführt werden.

2. Verfahren nach einem der Ansprüche 1,
**dadurch gekennzeichnet,**
**dass** der Statorkörper (1) und das Gehäuseteil (25) so ausgestaltet werden und der Klebstoff (26) so ausgewählt wird, dass das Fließen des Klebstoffs (26) in den Fügespalt (29) durch eine Kapillarwirkung zumindest unterstützt wird.

3. Verfahren nach einem der Ansprüche 1 bis 2,
**dadurch gekennzeichnet,**
**dass** der Statorkörper (1) und das Gehäuseteil (25) beim Erwärmen des Klebstoffs (26) so im Raum orientiert und/oder bewegt werden, dass ein Fließen des Klebstoffs (26) in den Fügespalt (29) und/oder eine Verteilung des Klebstoffs (26) in dem Fügespalt (29) durch die Schwerkraft und/oder eine andere Beschleunigungskraft zumindest unterstützt wird.

4. Verfahren nach einem der vorherigen Ansprüche,
**dadurch gekennzeichnet,**
**dass** die Lamellen (3 - 9) des Statorkörpers (1) durch Stanzen gefertigt werden, und dass die Ausnehmung (13, 35, 36) der Lamelle (3 - 9), die zumindest teilweise die Aussparung (18, 35, 36) des Statorkörpers (1) bildet, durch Stanzen, Fräsen oder Drehen gebildet ist.

5. Verfahren nach einem der vorherigen Ansprüche,
**dadurch gekennzeichnet,**
**dass** der Klebstoff (26) als wärmeleitender Klebstoff (26) ausgebildet ist.

## Claims

1. Method for producing a connection between a stator body (1) and a housing part (25) comprising the following method steps:
a) making at least one recess (18, 35, 36) on an outer side (15) of the stator body (1) and/or on an inner side (28) of the housing part (25);
b) at least substantially filling the recess (18, 35, 36) with at least one adhesive (26);
c) inserting the stator body (1) into the housing part (25), the insertion being made possible by an assembly gap (29) formed between the outer side (15) of the stator body (1) and an inner side (28) of the housing part (25),
**characterized**
**in that** the heating of the adhesive (26) in the recess (18, 35, 36) to allow the adhesive (26) to flow out of the recess (18, 35, 36) into the assembly gap (29) and the thermal curing of the adhesive (26) are carried out in one and the same process step.

2. Method according to Claim 1,
**characterized**
**in that** the stator body (1) and the housing part (25) are designed, and the adhesive (26) is chosen such that the flowing of the adhesive (26) into the assembly gap (29) is at least assisted by a capillary action.

3. Method according to either of Claims 1 and 2,
**characterized**
**in that**, when heating the adhesive (26), the stator body (1) and the housing part (25) are oriented and/or moved in space in such a way that flowing of the adhesive (26) into the assembly gap (29) and/or distribution of the adhesive (26), in the assembly gap (29) is/are at least assisted by gravitational force and/or some other force of acceleration.

4. Method according to one of the preceding claims,
**characterized**
**in that** the fins (3-9) of the stator body (1) are produced by punching,
and **in that** the relief (18, 35, 36) in the fins (3-9), which at least partially forms the recess (18, 35, 36) of the stator body (1), is formed by punching, milling or turning.

5. Method according to one of the preceding claims,
**characterized**
**in that** the adhesive (26) is formed as a heat-conducting (26) adhesive.

## Revendications

1. Procédé de fabrication d'une connexion entre un corps de stator (1) et une partie de boîtier (25), comprenant les étapes de procédé suivantes :
a) configurer au moins un évidement (18, 35, 36) au niveau d'un côté extérieur (15) du corps de stator (1) et/ou au niveau d'un côté intérieur (28) de la partie de boîtier (25) ;
b) remplir au moins sensiblement l'évidement (18, 35, 36) avec au moins un adhésif (26) ;
c) introduire le corps de stator (1) dans la partie de boîtier (25), l'introduction étant possible par le biais d'une fente d'assemblage (29) formée entre le côté extérieur (15) du corps de stator (1) et un côté intérieur (28) de la partie de boîtier (25),
**caractérisé en ce que**
le chauffage de l'adhésif (26) dans l'évidement (18, 35, 36), afin de permettre un écoulement de l'adhésif (26) hors de l'évidement (18, 35, 36) dans la fente d'assemblage (29), et le durcissement thermique de l'adhésif (26) sont effectués dans une étape de processus commune.

2. Procédé selon la revendication 1,
**caractérisé en ce que**
le corps de stator (1) et la partie de boîtier (25) sont configurés de telle sorte, et l'adhésif (26) est choisi de telle sorte, que l'écoulement de l'adhésif (26) dans la fente d'assemblage (29) soit au moins assisté par un effet capillaire.

3. Procédé selon l'une quelconque des revendications 1 à 2,
**caractérisé en ce que**
le corps de stator (1) et la partie de boîtier (25), lors du chauffage de l'adhésif (26), sont orientés et/ou déplacés dans l'espace de telle sorte qu'un écoulement de l'adhésif (26) dans la fente d'assemblage (29) et/ou une distribution de l'adhésif (26) dans la fente d'assemblage (29) soient au moins assistés par la force de pesanteur et/ou par une autre force d'accélération.

4. Procédé selon l'une quelconque des revendications précédentes,
**caractérisé en ce que**
les lamelles (3-9) du corps de stator (1) sont fabriquées par estampage et **en ce que** l'évidement (18, 35, 36) des lamelles (3-9), qui forme au moins en partie l'évidement (18, 35, 36) du corps de stator (1), est formé par estampage, fraisage ou tournage.

5. Procédé selon l'une quelconque des revendications précédentes,
**caractérisé en ce que**
l'adhésif (26) est réalisé sous forme d'adhésif thermoconducteur (26).
